(19) Europäisches Patentamt
European Patent Office
Office européen des brevets

(11) **EP 4 678 702 A1**

(12) # EUROPEAN PATENT APPLICATION

(43) Date of publication:
14.01.2026 Bulletin 2026/03

(21) Application number: 25186192.8

(22) Date of filing: **30.06.2025**

(51) International Patent Classification (IPC):
**C09D 5/02** (2006.01)    **C09D 5/04** (2006.01)
**C09D 7/43** (2018.01)

(52) Cooperative Patent Classification (CPC):
**C09D 7/43; C09D 5/024; C09D 5/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.07.2024 IT 202400015946**

(71) Applicant: **Lamberti SPA
21041 Albizzate (VA) (IT)**

(72) Inventors:
- GIUDICI, Max
  **22074 Lomazzo (CO) (IT)**
- D'AMICO, Pierpaolo
  **21052 Busto Arsizio (VA) (IT)**
- LANGELLA, Valentina
  **20151 Milano (MI) (IT)**
- GATTI, Barbara
  **20025 Legnano (MI) (IT)**

(74) Representative: **Giaroni, Paola
LAMBERTI S.p.A.
Ufficio Brevetti
Via Piave, 18
21041 Albizzate (VA) (IT)**

(54) **ARCHITECTURAL COATING COMPOSITIONS**

(57)    Water-based architectural coating compositions having improved sagging resistance due to the presence of a depolymerized hydroxypropyl guar having a molar substitution (MS) determined by $^1$H-NMR comprised between 0.10 and 0.70 and RVT Brookfield viscosity at 10 wt% in water, at 20 °C and 20 rpm, comprised between 500 and 20,000 mPa*s.

**Description**

TECHNICAL FIELD

The present invention relates to water-based architectural coating compositions that upon application exhibit improved sag resistance due to the presence of a depolymerized hydroxypropyl guar having a molar substitution (MS) comprised between 0.10 and 0.70 and RVT Brookfield viscosity at 10 % by weight in water, at 20 °C and 20 rpm, comprised between 500 and 20,000 mPa∗s.

BACKGROUND OF THE ART

Architectural coating compositions are surface coatings that are applied to substrates and dried to form continuous films for decorative purposes as well as to protect the substrate. Consumer latex paints and clearcoat varnishes are air-drying and primarily decorative water-based architectural coating compositions applied to interior or exterior surfaces, where the coatings are sufficiently fluid to flow and form a continuous and uniform paint film and subsequently dry at ambient temperatures. Industrial maintenance paints and varnishes are similar coatings applied to substrates in industrial environments to primarily protect the substrate.

Water-based architectural coating compositions, such as latex paints, have captured a significant portion of the indoor and outdoor architectural coating market as a result of the many advantages that such paints have over solvent-based products. They ordinarily comprise organic polymeric binders, pigments sand/or fillers and various paint additives. In dried paint films, the polymeric binder functions as a binder for the pigments/fillers and provides adhesion of the dried paint film to the substrate. The pigments may be organic or inorganic and functionally contribute to opacity and color, in addition to durability and hardness, of the dried paint film. The fillers are substances which are usually added to the paint to increase bulk, weight, opacity, or strength.

Architectural coating compositions require effectiveness in a number of properties to permit proper utilization thereof. For instance, they should exhibit a suitable flow out of the storage receptacle as well as adhesion to a brush; upon application to a surface, architectural coating compositions should flow and level within the brush stroke or paint roller tracks left on the surface so as to create a uniform coating; they should show a uniform coloration over the target surface, they should exhibit a propensity for stability when stored after initial preparation on-site or at a place of purchase/production; moreover architectural coating compositions should also exhibit pseudoplastic behavior to enable the composition to be applied readily by brush or roller or spray application.

On top of all that, it is particularly important that architectural coating compositions show remarkable sag resistance.

Sagging is a defect of the final coating as the result of excessive flow of the architectural coating composition on inclined or vertical surfaces, which causes uneven coating thickness with the excess of paint accumulating at the substrate edges. Controlling sag resistance is one of the main tasks for the architectural coating industry since it is directly related to the success of coating processes. Poor sag resistance can result in obvious defects after its application on the substrate, such as "curtaining" and "tears".

To avoid sagging on inclined or vertical surfaces, these compositions must exhibit non-Newtonian rheology, that is, they must be shear-thinning to facilitate application, but, at the same time, it must recover the viscosity after a short period of time when the applied force is removed (thixotropy). This recovery, however, should not be so fast that the normal flow can eliminate the potential levelling defects, such as craters and wavy surfaces.

The problem of sagging can be also expressed in terms of yield stress. An architectural coating composition without yield stress once applied sags under the influence of gravity. No sagging will occur if the yield stress is larger than the gravitational stress. However, if the coating is thick enough so that the gravitational stress exceeds the yield one, it leads to fat rims at the edge. Increasing applied layer thickness, the composition finally flows forming "curtains" or "tears".

To overcome all these problems, rheology modifiers additives acting as anti-sagging agents are used in the formulation of architectural coating compositions.

Rheology modifiers (thickeners) suitable as anti-sagging agents for water-based architectural coating compositions can be high molecular weight polymers, e.g. natural polymers, such as guar gum or xanthan gum, synthetic polymers, such as polyacrylate or polyurethane, or semi-synthetic polymers, or chemically modified natural polymers.

Among the chemically modified natural polymers, the thickeners of choice to control sagging of water-based architectural coating compositions are the derivatives of cellulose, including carboxymethyl cellulose (CMC), hydroxyethyl cellulose (HEC), ethyl hydroxyethyl cellulose (EHEC), methyl cellulose (MC), methyl hydroxyethyl cellulose (MHEC), hydroxypropyl methyl cellulose (HPMC), hydrophobically modified hydroxyethyl cellulose, and blends of them.

Guar derivatives, such as hydroxyethyl guar, hydroxypropyl guar and hydrophobically modified hydroxypropyl guar, are also well-known rheology modifiers for water-based architectural coating compositions. Like the cellulose derivatives, they modify the viscosity and rheology of the architectural coating compositions by imparting pseudoplastic behavior.

Now, we have surprisingly found that nonionic depolymerized hydroxypropyl guars (HPG) having a molar substitution (MS) between 0.1 and 0.7 and 0.70 and RVT Brookfield viscosity at 10 % by weight in water, at 20 °C and 20 rpm, comprised between 500 and 20,000 mPa*s are thickeners that, despite their Newtonian behaviour in water, show a non-Newtonian behavior in water-based architectural coating compositions and have remarkable anti-sagging performances, simultaneously according effective flow, leveling, and other important properties to the final products.

As far as the Applicant knows, none has described the anti-sagging properties of a depolymerized low MS HPG in water-based architectural coating compositions.

EP 0 894 834 describes water-borne paints containing reduced molecular weight polysaccharide derivatives that are resistant to enzyme hydrolysis. HPG is mentioned as one of the precursor polysaccharides, among many other guar derivatives and polysaccharide derivatives. In EP 0 894 834 it is stated that in case the precursor polysaccharide derivative is a hydroxyalkylated polysaccharide, it preferably has MS of about 1 or higher. Anti-sagging properties of the reduced molecular weight polysaccharide derivatives are not suggested.

US 2005/164892 relates to methods for depolymerizing galactomannan and derivatives thereof, particularly hydroxypropyl galactomannan and also to compositions comprising depolymerized galactomannan and derivatives thereof, and to uses for these compositions. Suggested uses include the manufacture of cosmetics, foodstuffs, drugs, paper, tobacco products or explosives or for printing or dyeing textiles, mining, or water treatment.

EP 2714746 discloses hydroxypropyl guars with a molar substitution between 1.5 and 2.3 and with a specific substitution pattern suitable as additive in building compositions and in water-based paints. The viscosity of the HPG can be very low, i.e. the average molecular weight of the HPG can be very low. However, the technical problem of sagging is never discussed and the use of low MS and low Brookfield viscosity HPG as anti-sag agent is not mentioned or suggested.

WO 2016/169814 describes a method for the preparation of water-based paints comprising mixing in water: a pigment and/or a filler, an organic binder and extruded pellets containing a rheological modifier consisting of one or more polysaccharides or polysaccharide derivatives, a dispersant and a defoamer. The polysaccharide can be guar or a derivative thereof, such as hydroxypropyl guar. WO 2016/169814 does not describe or suggest the use of depolymerized hydroxypropyl guar.

"Clearcoat" (or "clear coating") is a transparent outermost layer of a substrate or of a multilayer coating structure applied to a substrate. Clearcoat can be obtained with "clearcoat varnishes", or here simply "varnishes", which, as defined in the present text, contain water, binder(s) and conventional minor additives, but no pigment or filler, and are applied directly over a substrate or over a pigmented, opaque coating to improve gloss and provide protection to the pigmented coating below.

"Latex paints", or here simply "paints", as defined in the present text, are instead water based architectural coating compositions comprising water, binder(s), filler(s) and/or pigment(s).

With "depolymerized hydroxypropyl guar" we mean a hydroxypropyl guar whose Brookfield viscosity has been reduced using a degrading treatment.

With the expression "molar substitution" (MS), we mean the average number of hydroxyalkyl substituents on each anhydroglycosidic unit of guar, which can be measured, for example, by $^1$H-NMR.

DRAWINGS

Figure 1 shows the rheological curve (viscosity as a function of shear rate) of an aqueous solution of a depolymerized HPG (Blank1) and of a non-depolymerized HPG (Blank 2).
Figure 2 shows the rheological curve of clearcoat varnishes containing a depolymerized HPG, (Example 1, according to the invention) and a non-depolymerized HPG (Example 2, comparative).

SUMMARY OF THE INVENTION

It is therefore an object of the present invention a water-based architectural coating composition comprising at least one organic polymeric binder, optionally at least one pigment and/or one filler, and, as anti-sag agent, from 0.10 to 20.0 % by weight (wt%), based on the dry matter content of the composition, of a depolymerized hydroxypropyl guar having a MS determined by $^1$H-NMR comprised between 0.10 and 0.70 and showing an RVT Brookfield viscosity at 10 % by weight in water, at 20 °C and 20 rpm, comprised between 500 and 20,000 mPa*s.

It is another object of the invention a method of coating an architectural surface, said method comprising the following steps:

a) providing said water-based architectural coating composition;

b) applying the water-based architectural coating composition on the architectural surface to obtain a coated surface;
c) allowing the coated surface to dry.

It is a further object of the invention the use of from 0.10 to 20.0 wt%, based on the dry matter content of the composition, of a depolymerized hydroxypropyl guar having a MS determined by $^1$H-NMR comprised between 0.10 and 0.70 and a RVT Brookfield viscosity at 10 % by weight in water, at 20 °C and 20 rpm, comprised between 500 and 20,000 mPa∗s for increasing the sag resistance of water-based architectural coating compositions comprising at least one organic polymeric binder and, optionally, at least one pigment and/or one filler.

DETAILED DESCRIPTION OF THE INVENTION

In one embodiment of the invention, the water-based architectural coating composition is a clearcoat varnish, i.e. it comprises at least one binder and from from 0.10 to 20.0 wt%, based on the dry matter content, of said depolymerized hydroxypropyl guar and does not comprise any pigment or filler.

Typically, the clearcoat varnish of the invention comprises from 0.1 to 99.9 wt%, based on the dry matter content, preferably from 1.0 to 80 wt%, of at least one binder.

In another embodiment of the invention, the water-based architectural coating composition is a latex paint, i.e. it contains at least one organic polymeric binder, at least one pigment and/or one filler and from 0.10 to 20.0 wt%, based on the dry matter content, of said depolymerized hydroxypropyl guar.

Latex paints are commonly characterized in terms of their pigment volume concentration (PVC), which is the volume relationship of pigment/filler to total solids in the dry paint film. The percent PVC is calculated with the following formula:

$$\%\mathrm{PVC} = \frac{Vf + Vp}{Vf + Vp + Vb} \times 100$$

where

$V_p$ is the total pigment volume,
$V_f$ is the total filler volume,
$V_b$ is the total binder volume.

The minimum value of the percent PVC for the latex paint of this invention is preferably about 1.0 %. The maximum value is preferably about 95 %. Typical levels of pigment and binder depend on the type of paint, i.e. gloss, semi-gloss or matte finish. Typically, the latex paint of the invention, besides the depolymerized HPG, contains, based on the dry matter content of the composition: from 1,0 to 95 wt%, in particular from 5,0 to 70 wt%, of at least one pigment and/or one filler; from 0.1 to 85 wt%, in particular from 1,0 to 60 wt%, of binder.

Preferably, the water-based architectural coating composition of the invention comprises from 0.20 to 15.0 wt% more preferably from 0.50 to 10.0 wt%, based on the dry matter content, of said depolymerized HPG.

Preferably, the depolymerized HPG has molar substitution comprised between 0.15 and 0.60, more preferably between 0.20 and 0.45.

Preferably, the depolymerized HPG shows an RVT Brookfield viscosity at 10 wt% in water, at 20°C and 20 rpm, comprised between 1,000 and 17,000 mPa∗s, more preferably between 2,000 and 13,000 mPa∗s, most preferably between 2,500 and 13,000 mPa∗s. Depolymerized HPG showing an RVT Brookfield viscosity at 10 wt% in water, at 20°C and 20 rpm, comprised between 3,000 and 9,000 mPa∗s are particularly preferred.

The depolymerized HPG of the invention can be prepared by using any of the methods known in the art. Several studies describe methods for depolymerizing polysaccharides and, in particular, polygalactomannans, such as guar and guar derivatives. We can cite, for example, US 3,728,331, US 4,874,854, US 5,708,162, US 4,753,659, US 6,884,884, EP 030 443, EP 1417 240, JP 7100017, WO 93/15116, WO 99/04027, Vijayendran and Bone (Carbohydrate Polymers 1994, 4: 299-313), Frollini, E. et al. (Carbohydrate Polymers 1995, 27: 129-135), Ouchi, T., et al. (J.M.S. Pure Appl. Chem. 1997, A34(6): 975-989), Tayal, A., et al. (Macromolecules 2000, 33:9488-9484).

Hydroxypropyl derivatives of guar can be obtained, for example, by chemical reaction of the hydroxyl groups of the polygalactomannan chain with propylene oxide, in the presence of an alkaline catalyst (such as sodium hydroxide) and of water or a water/water-soluble solvent mixture, according to procedures well known to the man skilled in the art. Specific details can be found for example in " Industrial Gums: Polysaccharides and their Derivatives", 3rd Ed., Whistler, Roy, L, and BeMiller, James N., Academic Press (1993).

"Guar gum" or simply "Guar" consists of a main linear chain of mannose units bearing branches of galactose units in a molar ratio of about 2:1 and is made by the thermomechanical treatment of the seeds of "Cyamopsis Tetragonolobus", a leguminosae cultivated in the semi-dry regions of tropical countries, particularly in India and in Pakistan. It is usually found in the form of "splits", that are the endosperms of the seed deprived of the husk and from the inner part, the germ, or in the form of powder (flour) of different particle-size, which is obtained from the splits by milling.

The derivatization process with propylene oxide is applicable indifferently to guar in the form of flour or in the form of "splits".

In one embodiment of the invention, the derivatization process is performed in the presence of a solvent, i.e. water or, preferably, a water/water-soluble solvent mixture. In another embodiment, the derivatization process is performed without the addition of any solvent (solvent-free).

The depolymerization can be performed before or after the derivatization process by oxidation, for example with alkali or hydrogen peroxide, or by other depolymerization reactions, such as enzymatic or thermal de polymerization, or acid hydrolysis. The depolymerized HPG used in this invention is preferably prepared by oxidation with hydrogen peroxide.

The depolymerized HPG used for the realization of the invention can be purified with methods well known in the art from the by-products generated during the chemical reaction (glycols, polyglycols, inorganic/organic salts), for example washing with water or an organic solvent, or a mixture of both.

In a preferred embodiment of the present invention, the depolymerized HPG is not purified. This is a further relevant advantage of the present invention as the depolymerized HPG guarantee good performances without the need of a purification step after their preparation, and, as a consequence, they are obtainable at substantially a lower cost.

In one embodiment of the invention, the depolymerized HPG suitable for the preparation of the water-based architectural coating composition of the invention can be temporarily and reversibly crosslinked with glyoxal, boron, or other reversible crosslinking agents. This crosslinking, which is pH dependent, allows to improve the dissolution of the depolymerized hydroxypropyl guar in the paint.

Finally, the depolymerized HPG is dried and recovered using means known in the art. Examples of such means include air drying, fluidized bed drying, filtering, centrifuging, addition of solvents, freeze drying and the like. The use of fluidized bed drying is particularly recommended.

In a preferred embodiment, the depolymerized HPG of the invention is obtained by reducing the viscosity of guar before the derivatization reaction.

In another preferred embodiment, the depolymerized HPG of the invention is obtained by reducing the viscosity of a hydroxypropyl guar.

In accordance with the invention, there is no need to impose any restriction regarding the selection of suitable compounds to be used as binders, pigments/fillers or any other additives of the water-based architectural coating composition of the invention.

The organic polymeric binder may be any standard type and may include different binder materials. Preferred organic binders are water-soluble, water-dispersible or water-emulsifiable, natural, natural-modified or synthetic, film-forming compounds. Examples of natural binders include natural resins, such as rosin or schellac, natural oils, especially oils containing fatty acids which are saturated or contain various degrees of unsaturation, said oils being oxidatively drying if desired, such as linseed oil, soya oil, castor oil, and the like. Modified natural binders are, in particular, chemically modified natural resins, e.g. rosin-maleate resin, and also modified oils, e.g. isomerized oils, styrenated and acrylated oils, and also cellulose derivatives such as cellulose nitrates, cellulose esters of organic acids. Examples of synthetic binders are saturated polyesters obtained by polyesterifying bifunctional or higher polyfunctional alcohols with polyfunctional saturated-aliphatic, cyclo-aliphatic or aromatic carboxylic acids and/or their anhydrides. Further synthetic organic binders are alkyd resins (polyesters modified with unsaturated fatty acids, fatty oils or higher synthetic carboxylic acids) and also chemically modified alkyd resins, examples being styrenated, acrylated or urethanized. Further suitable organic binders include acrylic resins (polyacrylates) in the form of their homopolymers and copolymers, e.g. styrene acrylate, and also polyacrylic polyols. Water-dispersible acrylic resins are particularly preferred.

Pigments and fillers suitable for the present invention include those known from the prior art.

Examples of suitable pigments are inorganic white pigments, inorganic chromatic pigments, organic pigments, carbon blacks and inorganic black pigments. As inorganic white pigments, mention should be made in particular of oxides, such as titanium dioxide, zinc oxide (ZnO, zinc white), zirconium oxide, carbonates such as lead white, sulfates, such as lead sulfate; titanium dioxide is particularly preferred. As inorganic chromatic pigments, mention should be made of those from the group of oxides and hydroxides in the form of their individual inorganic compounds or mixed phases, especially iron oxide pigments, chromium oxide pigments and oxidic mixed-phase pigments with rutile or spinel structure. Examples of iron oxide pigments are Colour Index Pigment Yellow 42 and Pigment Red 101. Examples of chromium oxide pigments are Colour Index Pigment Green 17 and Pigment Green 18. Examples of oxidic mixed-phase pigments are nickel-titanium yellow and chromium-titanium yellow, cobalt green and cobalt blue. Examples of inorganic black pigments that should be mentioned include those as already described above together with the inorganic chromatic pigments, in particular black iron oxide and black oxidic mixed-phase pigments. Examples of preferred organic pigments are those of the monoazo, disazo, azo-lake, beta-naphthol, azo metal complex series, and also polycyclic pigments such as those from the phthalocyanine, quinacridone, and thioindigo series. Suitable as organic pigments are also lake-dyes such as Ca, Mg and Al lake-dyes containing sulphonic acid or carboxylic acid groups, and also carbon blacks. Mention should be made in particular of carbon blacks obtained by the furnace black process, and also chemically surface-modified carbon blacks, such as sulpho- or carboxyl-containing carbon blacks.

Fillers, also called extender pigments, comprise substances other than the pigments mentioned, these substances being primarily light in color and being inert towards the binder component. With particular preference, the fillers have a lower optical refractive index than the aforementioned white pigments. Examples of inorganic fillers that may be mentioned include carbonates, such as chalk, calcite or dolomite, silicon dioxide (ground quartz), natural or synthetic silicas, silicates, such as talc, kaolin or mica, and sulfates such as barium sulfate. Examples of organic fillers include polymeric powders and those known as hollow spheres.

In one embodiment of the invention, the water-based architectural coating composition can also include from 4.9 to 98.9 wt%, in particular from 10 to 80 wt%, of water.

The water-based architectural coating composition can further comprise from 0.1 to 6.0 wt%, based on the dry matter content of the composition, preferably from 0.20 to 4.0 wt%, of an additional thickener selected among those commonly used in the field. The further thickeners can be inorganic thickeners, such as bentonite; natural polymers, such as guar, xanthan or micro-fibrillated cellulose; synthetic polymers, such as polyacrylate or polyurethane based thickener; or semi-synthetic polymers, or chemically modified natural polymers. Among the chemically modified natural polymers, the thickeners of choice can be derivatives of cellulose, including carboxymethyl cellulose, hydroxyethyl cellulose, ethyl hydroxyethyl cellulose, methyl cellulose, methyl hydroxyethyl cellulose, methyl hydroxypropyl cellulose, hydrophobically modified hydroxyethyl cellulose and blends of them. Guar and cassia derivatives, such as hydroxyethyl or non-depolymerized hydroxypropyl guar or cassia and hydrophobically modified hydroxypropyl guar and cassia are other suitable additional thickeners for the preparation of the water-based architectural coating composition of the invention.

As additives, the water-based architectural coating composition of the invention may optionally comprise surface-active agents and defoamers. Surface-active agents used are preferably dispersants, wetting agents and emulsifiers as widely used in field. In particular, they may be nonionic, anionic, cationic or amphoteric, and monomeric or polymeric, in nature. Certain suitable thixotropic agents may also be included within the architectural coating composition as well. These would include, without limitation, phyllosilicates, pyrogenic silicas, and organic compounds based, for example, on high molecular mass polyolefins, hydrogenated castor oil, polyamides or polyacrylates. Suitable defoamers include those based on natural oils or mineral oils, chemically modified silicones and silica materials.

Besides the additives mentioned above, the water-based architectural coating composition may include other standard additives and adjuvants, such as water-softeners, pH regulators, film-forming and levelling agents, dryers (siccatives), anti-skinning agents, anti-fouling agents, UV protectants and stabilizers, biocides, and the like. Solvents may also be present within the architectural coating composition. Preferred solvents include water-soluble or water-miscible solvents.

The water-based architectural coating composition of the invention is generally manufactured by a two-step process. First, a dispersion phase, commonly referred to as the grind phase, which is performed by mixing dry pigments with a portion of the liquid composition components, including also most other solid powder composition materials, under constant high shear agitation to provide a high viscosity and high solids mixture. The second step of the composition manufacturing process is commonly referred to as the letdown or thindown phase, because the viscous grind is diluted with the remaining composition components, which are generally less viscous or less stable to high shear than the grind mix.

The water-based architectural coating compositions of the invention can be applied to both interior or exterior architectural surfaces, such as a roof, wall, floor, or combination thereof.

These compositions can be applied by any known conventional technique, such as brushing, rolling, spraying or spreading.

They can be applied in a single coat, or in multiple coats as required.

Once applied, the coatings can be allowed to dry under ambient conditions or they can be dried by heating and/or by forced ventilation.

EXAMPLES

*Ingredients*

The following ingredients were used for the preparation of the water-based architectural coating compositions of the Examples.

Acronal® S 790 = styrene acrylic binder from BASF Italia S.p.A.;
BYK® 028 = silicone defoamer from BYK Gmbh;

Na-HMP = Sodium Hexametaphosphate (20 wt% water solution);
Reotan® L = polyacrylic acid dispersant from Lamberti S.p.A.;
Verapon® B 110 = non-ionic Wetting agent from Lamberti S.p.A.;
Defomex 2033 N = defoamer from Lamberti S.p.A.;
Tioxide® RXL = titanium dioxide from Huntsman Corp.;
Omyacarb® 2 AV = calcium carbonate filler from Omya S.p.A.;
Carbital® C 130 = calcium carbonate filler from Imerys S.A.;
Texanol® = coalescing agent from Eastman Chem. Company;
Viscolam® 330 = anionic polyacrylate thickener from Lamberti S.p.A.;
BYK® 024 = silicone defoamer from BYK Gmbh;
Reotan® HS = polyacrylic acid dispersant from Lamberti S.p.A.;
Tioxide® R-HD2 = titanium dioxide from Huntsman Corp.;
Crilat 4830 = polyacrylic binder from Vinavil S.p.A.;
Decosphaera® Transparent HAP 30 = hydroxyapatite matting agent from Lamberti S.p.A.;
Viscolam® PS 170 AIR = associative polyurethane thickener from Lamberti S.p.A.;
Lerisene® AZC = Zirconium Compound in aqueous solution from Lamberti S.p.A.;
Viscolam® 630 = associative polyacrylate thickener from Lamberti S.p.A.;
Viscolam® PS 010 AIR = associative polyurethane thickener from Lamberti S.p.A.

*Characterization Methods*

The RVT Brookfield viscosity of the depolymerized HPG were determined on a 10 wt% aqueous solution at 20 °C and 20 rpm.

The Stormer viscosity was determined using a Stormer viscosimeter (Brookfield KU-1+) at 20 °C. The Stormer viscosity is commonly used in the architectural coating industry, because it allows to evaluate the consistency of the product.

The rheological behavior as a function of the shear stress was determined with an Anton Paar MCR 302 Rheometer equipped with a CP-50 Measuring System (cone and plate geometry).

Hydroxypropyl MS was determined by $^1$H-NMR analysis using a JEOL ECZ400R/S3 NMR spectrometer equipped with a RO5MAT Royal Digital Autotune Probe 5 mm i.d. Before the analysis, the depolymerized HPGs were purified by dialysis and then recovered by freeze-drying. 50 mg of purified products were then hydrolyzed with DCI (0.25 ml of DCI 35% and 1 ml of D2O) for 30 min in boiling water and filtered to obtain a solution suitable for the $^1$H-NMR analysis. The hydroxypropyl MS was calculated using the signals of the non-anomeric protons of the ring and those of the methyl protons of the hydroxypropyl substituent.

Sagging was determined according to standard method ASTM D4400-18. The results are reported in $\mu$m.

The thixotropy of the latex paints was determined by the "3 intervals thixotropy test" (3ITT) performed in a controlled shear rate (CSR) with an Anton Paar rotational rheometer mod. MCR 302. A low shear rate of 1.0 s$^{-1}$ and a high shear rate of 500 s$^{-1}$ for 10.0 sec were applied in the tests. The results are reported as % recovery of the viscosity after 2.0 sec.

Levelling was determined according to standard method ASTM D4062. The results are reported as the % ratio between the black area between the two lines covered by the white latex paint as it levels versus the total area that can be potentially covered. Spattering was evaluated by applying the paint using a 11x1.5 cm roller (ten passes in each direction) on a wrapping paper sheet (35x50 cm) placed on wall. A black cardboard (24x33 cm) placed horizontally under the wrapping paper was used to catch the spattered drops. Each cardboard was rated visually with integers from zero (very high spattering) to 10 (very low spattering).

Flowability was determined using a Ford viscosity cup 7 and recording the time before the flows become discontinuous.

*Depolymerized HPG*

Depolymerized HPG (D-HPG) having different MS and Brookfield viscosities were prepared.

The depolymerized HPG D-HPG 1-4 and 7 were obtained by depolymerizing under inert atmosphere guar gum with a hydrogen peroxide solution (130 volumes) in the presence of a 1/19 water/isopropyl alcohol mixture and sodium hydroxide (50 wt% aqueous solution).

The obtained depolymerized guars were then derivatized with propylene oxide. At the end of the derivatization, the pH of the mass was adjusted to about 8 with acetic acid, the solvent was distilled off and the depolymerized HPG was dried on a fluid bed drier using hot air until the moisture content was about 10 wt% and then milled.

The depolymerized HPG D-HPG 5 and 6 were obtained with the same procedure without the addition of the water/isopropyl alcohol mixture (solvent-free process). Before the distillation of the solvent, the depolymerized HPG D-HPG 2 and 6-7 were crosslinked with glyoxal.

Table 1 summarizes the characteristic the D-HPG which have been utilized for the preparation of water-based architectural coating compositions of the Examples. The viscosity of a 10 wt% aqueous solution of D-HPG 1 and D-HPG 2 was higher than 50,000 mPa*s.

A non-depolymerized commercial HPG (HPG 1), having a MS of 0.35 and a RVT Brookfield viscosity of about 15,550 mPa*s (2.0 wt% aqueous solution at 20 rpm and 20 °C), was also used.

Table 1

|  | Solvent | Glyoxal | MS | BRK Visc. (mPa*s) |
|---|---|---|---|---|
| D-HPG 1* | Yes | No | 1.8 | 414** |
| D-HPG 2* | Yes | Yes | 0.35 | 4,800** |
| D-HPG 3 | Yes | No | 0.30 | 16,000 |
| D-HPG 4 | Yes | No | 0.40 | 8,700 |
| D-HPG 5 | No | No | 0.30 | 5,660 |
| D-HPG 6 | No | Yes | 0.27 | 4,100 |
| D-HPG 7 | Yes | Yes | 0.40 | 4,390 |
| D-HPG 8 | Yes | Yes | 0.33 | 5,380 |
| * Comparative<br>** 2.0 wt% aqueous solution at 20 rpm and 20 °C | | | | |

*Clearcoat Varnish*

The clearcoat varnishes of the following Examples were prepared with the ingredients reported in Table 2. D-HPG 8 and HPG 1 were used as thickeners.

The rheological behavior of the two thickeners in water compositions containing all the ingredients except the binder was also investigated.

The ingredients were mixed under stirring in the order reported in Table 2 and carefully homogenized for 10 min.

Table 2

| Ingredients | wt% |
|---|---|
| Acronal S 790 | 75 |
| Biocide | 0.2 |
| Byk 028 | 0.5 |
| Thickener | see Table 3 |
| Water | To 100 |

Table 3 reports the amount of thickener used to reach a RVT Brookfield viscosity (at 20 rpm and 20 °C) of 2750 ± 250 mPa*s. Table 3 also reports the Stormer viscosity (in KU) of the corresponding clearcoat varnishes. Both viscosities were determined after 24 hours from the preparation.

Table 3

|  | Thickener | Amount (wt%) | BRK Visc. (mPa*s) | Stormer Visc. (KU) | Sagging (μm) |
|---|---|---|---|---|---|
| Blank 1 | D-HPG 8 | 9.44 | 2,955 | 107.6 | - |
| Blank 2 | HPG 1 | 1.28 | 2,580 | 78.0 | - |
| Example 1 | D-HPG 8 | 0.99 | 2,850 | 71.4 | >600 |

(continued)

|  | Thickener | Amount (wt%) | BRK Visc. (mPa∗s) | Stormer Visc. (KU) | Sagging (μm) |
|---|---|---|---|---|---|
| Example 2* | HPG 1 | 0.263 | 2,770 | 71.6 | >600 |
| * Comparative | | | | | |

Apparently, the two thickeners have the same behavior and performances.

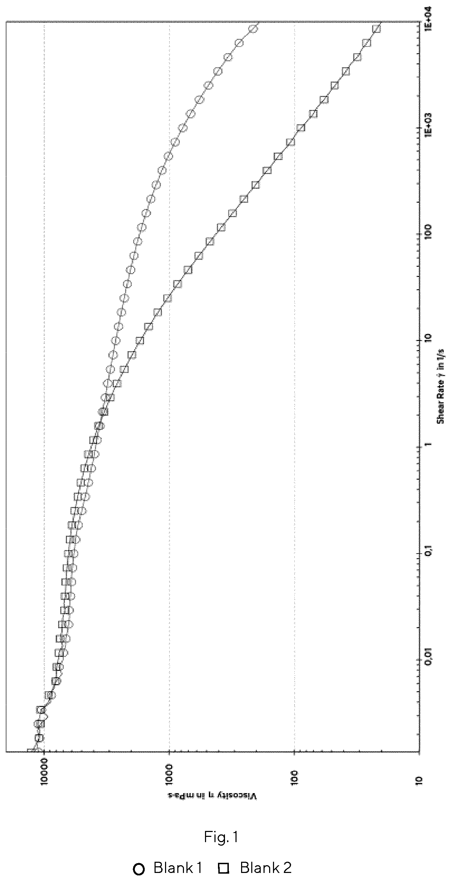

However, as it can be seen in Fig. 1, the two Blanks give viscosity vs shear stress curves completely different. The system with the depolymerized HPG is significantly more Newtonian, with a slow decrease of the viscosity increasing the shear stress, than the non-depolymerized HPG, which is more shear thinning.

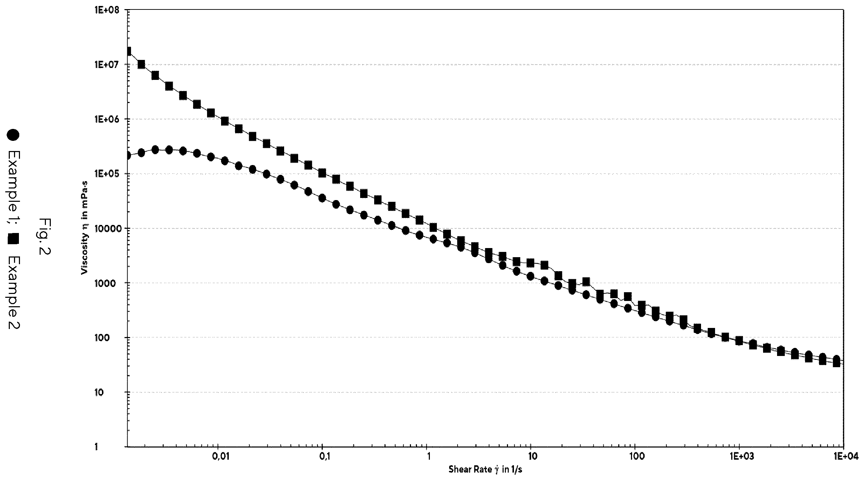

Surprisingly, in the clearcoat varnishes (Fig. 2), the two thickeners produce very similar curves, with a marked and advantageous shear thinning effect.

*High PVC Latex Paints 1*

The performances of the depolymerized HPG of Table 1 were determined on latex paints having a % PVC of 60 prepared with the commercially available ingredients reported in Table 4.

A comparative latex paint containing the unpolymerized HPG1 was also prepared.

For each HPG thickener, 1200 grams of latex paints were prepared according to the following procedure:

- all the ingredients of phase A were weighed in a plastic beaker and mixed stirring gently using a Cowles mixer;
- after 5 minutes, the thickener (phase B) was gradually poured into the mixture;
- after 5 minutes, the pigments/fillers (phase C) were added in the order as reported in Table 2 and dispersed at high speed for 15 minutes;
- at the end of the dispersion, the speed of the stirrer was reduced and the last ingredients of the formulations (phase D) were introduced into the mixtures;
- after 5 minutes of homogenization each latex paint was cooled at room temperature.

Table 5 reports the amount of thickener used to reach an RVT Brookfield viscosity (at 20 rpm and 20 °C) of 11,400 ± 400 mPa∗s. Table 5 also report the Stormer viscosity (in KU) of the corresponding latex paints. Both viscosities were determined after 24 hours from the preparation.

Table 4

|  | Ingredients | wt% |
|---|---|---|
| Phase A | Water | To 100 |
| | Na-HMP | 1.00 |
| | Biocide | 0.20 |
| | Reotan L | 0.20 |
| | Verapon B 110 | 0.70 |
| | Propylene Glycol | 0.50 |
| | Defomex 2033 N | 0.10 |
| Phase B | Thickener | see Table 5 |
| Phase C | Talc | 2.50 |
| | Tioxide RXL | 18.0 |
| | Omyacarb 2 AV | 10.0 |
| | Carbital C 130 | 12.5 |

(continued)

| | Ingredients | wt% |
|---|---|---|
| Phase D | Ammonia (25 wt% sol.) | 0.23 |
| | Acronal S 790 | 20.0 |
| | Defomex 2033 N | 0.10 |
| | Texanol | 0.50 |

Table 5.

| | Thickener | Amount (wt%) | Stormer Visc. (KU) |
|---|---|---|---|
| Example 3* | D-HPG 1* | 1.20 | 116.4 |
| Example 4* | D-HPG 2* | 0.78 | 112.4 |
| Example 5* | HPG 1 | 0.60 | 109.3 |
| Example 6 | D-HPG 3 | 1.90 | 116.7 |
| Example 7 | D-HPG 4 | 2.06 | 118.4 |
| Example 8 | D-HPG 5 | 2.27 | 117.2 |
| Example 9 | D-HPG 6 | 2.22 | 119.6 |
| * Comparative | | | |

Clearly, it is necessary to have a higher amount of the depolymerized HPG to reach the desired viscosity.

However, the paints of the invention show, on average, a higher Stormer viscosity.

Table 6 reports the results, as % recovery of the viscosity, of the 3IT Test, which allows the determination of thixotropy of the latex paints of the Examples.

Thixotropy is an important quality characteristic of latex paints.

It influences the way paint levels out, but also ensures a sufficient and consistent wet layer thickness.

Table 6

| | % Recovery |
|---|---|
| Example 3* | 80.8 |
| Example 4* | 80.8 |
| Example 5* | 77.4 |
| Example 6 | 74.5 |
| Example 7 | 85.7 |
| Example 8 | 79.4 |
| Example 9 | 81.8 |
| * Comparative | |

The latex paints containing the depolymerized HPG according to the invention, show good % recoveries, demonstrating to be able to retain their remarkable characteristics, such sag resistance, even after the application.

For the sagging, levelling, flowability and spattering tests, the latex paints of Examples 3-9 were diluted with water until they reach a Stormer viscosity of about 78 KU, which is the value commonly used on application.

Table 7 shows the results of the tests.

Table 7

| | Ex. 3* | Ex. 4* | Ex. 5* | Ex. 6 | Ex. 7 | Ex. 8 | Ex. 9 |
|---|---|---|---|---|---|---|---|
| Dilution Water (%) | 22.5 | 21 | 21 | 18 | 19 | 18.5 | 21 |

(continued)

|  | Ex. 3* | Ex. 4* | Ex. 5* | Ex. 6 | Ex. 7 | Ex. 8 | Ex. 9 |
|---|---|---|---|---|---|---|---|
| Stormer Visc. (KU) | 78.4 | 78.2 | 78 | 77.6 | 77 | 77.2 | 77 |
| Spattering | 9 | 5 | 2 | 7 | 9 | 9 | 8 |
| Sagging ($\mu$m) | 340 | 290 | 290 | 590 | 600 | >600 | 530 |
| Levelling (%) | 57.3 | 59.7 | 64.6 | 48.9 | 46.8 | 45.6 | 83.1 |
| Flowability (min.) | 20 | 17 | 13 | 21 | 21 | 19 | 21 |
| * Comparative | | | | | | | |

The results demonstrate that the depolymerized HPG of the invention have very good sag resistance to and also show excellent anti-spattering properties.

*High PVC Latex Paints 2*

Further latex paints with a % PVC of about 60 were prepared using as thickener a depolymerized HPG according to the invention and polyacrylic thickeners according to the prior art (Ex. 10 and 12-13).

In order to check the compatibility of the inventive polysaccharide with other thickeners, a latex paint comprising a combination of the depolymerized HPG and a non-depolymerized HPG was also prepared (Ex. 11).

The ingredients used for the preparations are reported in Table 8.

Table 9 reports the RVT Brookfield viscosity at 20 rpm and 20 °C (in mPa*s) and the Stormer viscosity at 200 rpm and 20 °C (in KU) of the latex paints of Examples 10-13 after 24 hours.

Table 8

|  |  | Ex. 10 (wt%) | Ex. 11 (wt%) | Ex. 12* (wt%) | Ex. 13* (wt%) |
|---|---|---|---|---|---|
| Phase A | Water | 31.17 | 31.59 | 32.27 | 30.86 |
|  | Na-HMP | 1.00 | 1.00 | 1.00 | 1.00 |
|  | Biocide | 0.20 | 0.20 | 0.20 | 0.20 |
|  | Reotan L | 0.20 | 0.20 | 0.20 | 0.20 |
|  | Verapon B 110 | 0.70 | 0.70 | 0.70 | 0.70 |
|  | Propylene Glycol | 0.50 | 0.50 | 0.50 | 0.50 |
|  | Defomex 2033 N | 0.10 | 0.10 | 0.10 | 0.10 |
| Phase B | HPG1 | 0 | 0.15 | 0 | 0 |
|  | D-HPG 7 | 2.30 | 1.73 | 0 | 0 |
|  | Viscolam 630 | 0 | 0 | 0.70 | 0 |
|  | Viscolam 330 | 0 | 0 | 0 | 1.80 |
| Phase C | Talc | 2.50 | 2.50 | 2.50 | 2.50 |
|  | Tioxide RXL | 18.0 | 18.0 | 18.0 | 18.0 |
|  | Omyacarb 2 AV | 10.0 | 10.0 | 10.0 | 10.0 |
|  | Carbital C 130 | 12.5 | 12.5 | 12.5 | 12.5 |
|  | Ammonia (25 wt% sol.) | 0.23 | 0.23 | 0.23 | 0.34 |

(continued)

| | | Ex. 10 (wt%) | Ex. 11 (wt%) | Ex. 12* (wt%) | Ex. 13* (wt%) |
|---|---|---|---|---|---|
| | Acronal S 790 | 20.0 | 20.0 | 20.0 | 20.0 |
| | Defomex 2033 N | 0.10 | 0.10 | 0.10 | 0.10 |
| Phase D | Texanol | 0.50 | 0.50 | 0.50 | 0.50 |
| | Viscolam 630 | 0 | 0 | 0.50 | 0 |
| | Viscolam 330 | 0 | 0 | 0 | 0.70 |
| * Comparative | | | | | |

Table 9

| | BRK Visc. (mPa∗s) | Stormer Visc. (KU) |
|---|---|---|
| Example 10 | 11,380 | 119.0 |
| Example 11 | 11,620 | 118.3 |
| Example 12* | 14,280 | 105.1 |
| Example 13* | 11,140 | 106.6 |
| * Comparative | | |

The latex paints of Example 10 and 11 showed a higher Stormer viscosity than those of the latex paints prepared with the polyacrylic thickeners.

The anti-sag and spatter resistance of the latex paints of the Examples 10-13 were determined after dilution with about 20 wt% of water. The results are reported in Table 10.

Table 10

| | Example 10 | Example 11 | Example 12* | Example 13* |
|---|---|---|---|---|
| Sagging ($\mu$m) | 590 | 490 | 440 | 490 |
| Spattering | 9 | 6 | 7 | 8 |
| * Comparative | | | | |

The results demonstrate that the depolymerized HPG of the invention (Ex. 10) gives better performances as anti-sagging agent than polyacrylic thickener of the prior art. In addition, it also shows stronger anti-spattering performances.

Used in combination with a thickener of the prior art,, which alone provided very poor results both in the sagging test and in the spattering test (see Example 5 in Table 7), the depolymerized HPG of the invention is able to guarantee stability and acceptable application performances in all tests.

*Low PVC Latex Paints*

Latex paints having a % PVC of 17 were prepared following a two-step process. In the first step, a white paste was prepared according to the formulation of Table 11.

All the liquid ingredients were mixed in a beaker under stirring (Cowles stirrer at 800 rpm) and homogenized for 10 minutes. Subsequently, titanium dioxide was gradually poured into the mixture and the stirring speed was increased to 1000 rpm for 20 minutes.

Table 11

| Ingredients | wt% |
|---|---|
| Water | 5.62 |
| Propylene Glycol | 3.0 |
| Byk 024 | 0.3 |

(continued)

| Ingredients | wt% |
|---|---|
| Reotan HS | 0.5 |
| Biocide | 0.2 |
| Tioxide R-HD2 | 14.6 |

In the second step, the following ingredients were used (Table 12).

Table 12

| Ingredients | wt% |
|---|---|
| Crilat 4830 | 13.33 |
| White paste | 24.22 |
| Decosphaera HAP 30 | 6.0 |
| Crilat 4830 | 45.57 |
| Butyl Diglycol | 3.3 |
| Byk 024 | 0.2 |
| Water | 3.0 |
| Viscolam PS 170 AIR | 0.3 |
| Thickener | see Table 13 |

A first aliquot of Crilat 4830 (binder) was weighed. Subsequently, the white paste and Decosphaera Transparent HAP 30 (matting agent) were introduced under stirring at 500 rpm. After 10 minutes, the remaining portion of the binder and all the other ingredients were carefully added following the order reported in Table 12. Finally, the latex paints were homogenized at 1300-1500 rpm for 10 minutes.

These latex paints are characterized by the fact that they also contain an associative polyurethane thickener (Viscolam PS 170 AIR).

Table 13 reports the amounts of further thickeners (according to the invention and comparative) added to the latex paints, the Brookfield viscosity (in mPa∗s) at 0.5 and 20 rpm and 20 °C and the Stormer viscosity of the latex paints of Examples 14-19.

Table 13

| | Thickener | wt% | Brook. Visc. 0.5 rpm | Brook. Visc. 20 rpm | Stormer Visc. KU |
|---|---|---|---|---|---|
| Blank | - | - | 6,320 | 3,800 | 99.8 |
| Ex. 14* | Lerisene AZC | 0.813 | 10,160 | 5,620 | 109.9 |
| Ex. 15* | Viscolam 630 | 0.103 | 17,840 | 6,920 | 110.9 |
| Ex. 16* | Viscolam PS 010 AIR** | 0.159 | 14,080 | 6,360 | 99.9 |
| Ex. 17 | D-HPG 4 | 0.167 | 84,000 | 12,500 | 120.7 |
| Ex. 18 | D-HPG 4 | 0.099 | 42,640 | 9,300 | 114.0 |
| Ex. 19* | Viscolam 330 | 0.203 | 15,120 | 6,530 | 110.4 |
| *Comparative <br> ** half dose of Viscolam PS 170 AIR in the recipe (0.159 wt%) | | | | | |

The amount of the depolymerized HPG required for the preparation of this kind of latex paints was surprisingly low, suggesting an advantageous interaction between the depolymerized HPG and the other ingredients of the paint. Moreover, the Brookfield viscosity at 0.5 rpm (low shear) of the latex paints of the inventions is much higher than that of the latex paints containing the prior art thickeners, suggesting superior anti-settling properties.

This is confirmed by the stability tests at room temperature for 14 days (Table 14). The performances of the latex paints of the invention are remarkably superior to those of the latex paints containing prior art thickeners.

Table 14

|  | Appearance |
|---|---|
| Blank | Settled - Hard Precipitate |
| Example 14* | Settled - Hard Precipitate |
| Example 15* | Settled - Soft Precipitate |
| Example 16* | Settled - Hard Precipitate |
| Example 17 | Homogeneous |
| Example 18 | Homogenous (Some Syneresis) |
| Example 19* | Settled - Soft Precipitate |

**Claims**

1. Water-based architectural coating composition comprising at least one organic polymeric binder, optionally at least one pigment and/or filler, and from 0.10 to 20.0 % by weight (wt%), based on the dry matter content, of a depolymerized hydroxypropyl guar (HPG) having a molar substitution (MS) determined by $^1$H-NMR comprised between 0.10 and 0.70 and RVT Brookfield viscosity at 10 wt% in water, at 20 °C and 20 rpm, comprised between 500 and 20,000 mPa·s.

2. The water-based composition of Claim 1 wherein the depolymerized HPG has an RVT Brookfield viscosity at 10 wt% in water, at 20 °C and 20 rpm, comprised between 1,000 and 17,000 mPa·s.

3. The water-based composition of Claim 1 wherein the depolymerized HPG has a MS determined by $^1$H-NMR comprised between 0.20 and 0.45.

4. The water-based composition of Claim 1 wherein said composition does not comprise any pigment or filler.

5. The water-based composition of Claim 1 comprising at least one pigment and/or filler.

6. The water-based composition of Claim 5 having a percent pigment volume concentration (%PVC) comprised between 1 and 95.

7. The water-based composition of Claim 1 further comprising from 0.10 to 6.0 wt%, based on the dry matter content, of an additional thickener.

8. Method of coating an architectural surface, said method comprising the following steps:

   a) providing a water-based architectural coating composition according to any of the preceding claims;
   b) applying the water-based architectural coating composition on the architectural surface to obtain a coated surface;
   c) allowing the coated surface to dry.

Fig. 1

○ Blank 1   □ Blank 2

Fig. 2

● Example 1;  ■ Example 2

Europäisches
Patentamt

European
Patent Office

Office européen
des brevets

## EUROPEAN SEARCH REPORT

**Application Number**

EP 25 18 6192

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/169814 A1 (LAMBERTI SPA [IT]) 27 October 2016 (2016-10-27) * the whole document * * page 1, lines 24-32 * * page 2, lines 28-31; claim 1 * | 1-8 | INV. C09D5/02 C09D5/04 C09D7/43 |
| A | EP 1 264 808 B1 (LAMBERTI SPA [IT]) 27 February 2013 (2013-02-27) * the whole document * * paragraphs [0001], [0002], [2265] - [0069]; claims 1, 2; example 1; table 1 * | 1-8 | |
| A | US 2004/072699 A1 (LIU LEO ZHAOQING [US] ET AL) 15 April 2004 (2004-04-15) * the whole document * * paragraphs [0002], [0003] * * paragraphs [0042], [0055]; example 1; table 2 * * paragraph [0052] * | 1-8 | |
| A | US 4 753 659 A (BAYERLEIN FRIEDRICH [DE] ET AL) 28 June 1988 (1988-06-28) * the whole document * * column 3, line 32 - line 45; claim 8; example 5 * | 1-8 | **TECHNICAL FIELDS SEARCHED (IPC)**<br><br>C09D |
| A | US 2014/023600 A1 (FUMAGALLI CHIARA [IT] ET AL) 23 January 2014 (2014-01-23) * the whole document * * claims 15-17 * | 1-8 | |
| A | US 2005/164892 A1 (MAGALLANES JESSE [US] ET AL) 28 July 2005 (2005-07-28) * the whole document * * paragraphs [0007] - [0009] * * paragraph [0014]; claims 23, 28, 31 * * paragraph [0019]; claim 34 * | 1-8 | |

-/--

The present search report has been drawn up for all claims

| Place of search | Date of completion of the search | Examiner |
|---|---|---|
| Munich | 28 November 2025 | Rangheard, Claudine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 18 6192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 99/04027 A1 (RHODIA [US]) 28 January 1999 (1999-01-28) * the whole document * * page 1, lines 9-15 * * page 1, lines 20-23 * * page 2, lines 22-29 * ----- | 1-8 | |
| | | | TECHNICAL FIELDS SEARCHED (IPC) |

The present search report has been drawn up for all claims

| Place of search | Date of completion of the search | Examiner |
|---|---|---|
| Munich | 28 November 2025 | Rangheard, Claudine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 6192

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2025

| Patent document cited in search report | | Publication date | Patent family member(s) | | Publication date |
|---|---|---|---|---|---|
| WO 2016169814 | A1 | 27-10-2016 | BR | 112017022408 A2 | 10-07-2018 |
| | | | EP | 3286267 A1 | 28-02-2018 |
| | | | IT | UB20150427 A1 | 20-10-2016 |
| | | | WO | 2016169814 A1 | 27-10-2016 |
| EP 1264808 | B1 | 27-02-2013 | CA | 2386298 A1 | 04-12-2002 |
| | | | EP | 1264808 A1 | 11-12-2002 |
| | | | ES | 2405791 T3 | 03-06-2013 |
| | | | IT | VA20010015 A1 | 04-12-2002 |
| | | | US | 2003221592 A1 | 04-12-2003 |
| US 2004072699 | A1 | 15-04-2004 | AU | 2003263753 A1 | 06-01-2004 |
| | | | BR | 0312077 A | 05-04-2005 |
| | | | BR | PI0312077 B1 | 13-06-2017 |
| | | | CN | 1671749 A | 21-09-2005 |
| | | | CN | 1970680 A | 30-05-2007 |
| | | | EP | 1551882 A2 | 13-07-2005 |
| | | | JP | 4653861 B2 | 16-03-2011 |
| | | | JP | 5580110 B2 | 27-08-2014 |
| | | | JP | 2005530897 A | 13-10-2005 |
| | | | JP | 2010285615 A | 24-12-2010 |
| | | | RU | 2323943 C2 | 10-05-2008 |
| | | | US | 2004072699 A1 | 15-04-2004 |
| | | | WO | 2004000885 A2 | 31-12-2003 |
| US 4753659 | A | 28-06-1988 | AU | 570757 B2 | 24-03-1988 |
| | | | CA | 1253491 A | 02-05-1989 |
| | | | EP | 0146911 A2 | 03-07-1985 |
| | | | ES | 8605539 A1 | 16-03-1986 |
| | | | NO | 159386 B | 12-09-1988 |
| | | | PT | 79757 A | 01-01-1985 |
| | | | US | 4753659 A | 28-06-1988 |
| US 2014023600 | A1 | 23-01-2014 | BR | 112013021244 A2 | 09-08-2016 |
| | | | EP | 2688548 A2 | 29-01-2014 |
| | | | ES | 2624909 T3 | 18-07-2017 |
| | | | KR | 20140040708 A | 03-04-2014 |
| | | | US | 2014023600 A1 | 23-01-2014 |
| | | | WO | 2012130642 A2 | 04-10-2012 |
| US 2005164892 | A1 | 28-07-2005 | EP | 1417240 A1 | 12-05-2004 |
| | | | US | 2003045708 A1 | 06-03-2003 |
| | | | US | 2005164892 A1 | 28-07-2005 |
| | | | WO | 02100902 A1 | 19-12-2002 |
| WO 9904027 | A1 | 28-01-1999 | AU | 8406298 A | 10-02-1999 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 18 6192

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2025

| Patent document cited in search report | Publication date | Patent family member(s) | Publication date |
|---|---|---|---|
| | | WO 9904027 A1 | 28-01-1999 |

For more details about this annex : see Official Journal of the European Patent Office, No. 12/82

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0894834 A
- US 2005164892 A
- EP 2714746 A
- WO 2016169814 A
- US 3728331 A
- US 4874854 A
- US 5708162 A
- US 4753659 A
- US 6884884 B
- EP 030443 A
- EP 1417240 A
- JP 7100017 B
- WO 9315116 A
- WO 9904027 A

**Non-patent literature cited in the description**

- **VIJAYENDRAN** ; **BONE**. *Carbohydrate Polymers*, 1994, vol. 4, 299-313
- **FROLLINI, E. et al.** *Carbohydrate Polymers*, 1995, vol. 27, 129-135
- **OUCHI, T. et al.** *J.M.S. Pure Appl. Chem.*, 1997, vol. A34 (6), 975-989
- **TAYAL, A. et al.** *Macromolecules*, 2000, vol. 33, 9488-9484
- **WHISTLER, ROY, L** ; **BEMILLER, JAMES N.** Industrial Gums: Polysaccharides and their Derivatives. Academic Press, 1993